# EUROPEAN PATENT APPLICATION

(11) **EP 1 484 427 A2**
(43) Date of publication of application: **08.12.2004**
(21) Application number: 04253222.6
(22) Date of filing: 28.05.2004
(51) Int. Cl.: C23C 4/00, C23C 28/00, C23C 30/00, F01D 5/00

(54) **Top coating system for industrial turbine nozzle airfoils and other hot gas path components and related method**

(30) Priority: 06.06.2003 US 455785
(71) Applicant: GENERAL ELECTRIC COMPANY, Schenectady, NY 12345 (US)
(72) Inventor: Marks, Paul Thomas, Simpsonsville, South Caroline 29681 (US); Skoog, Andrew Jay, West Chester, Ohio 45069 (US); Clare, James H., Crosby, Texas 77532 (US); Bruce, Kevin Leon, Greer, South Caroline 29651 (US); Stowell, William R., Rising Sun, Indiana 47040 (US); Murphy, Jane Ann, Franklin, Ohio 45005 (US); Rowe, Raymond Grant, Niskayuna, New York 12309 (US); McGovern, Tara E., Simpsonsville, South Caroline 29681 (US); Meyer, Robert Carl, Simpsonsville, South Caroline 29681 (US); Arness, Brian P., Simpsonsville, South Caroline 29681 (US); Roling, Mathew Curtis, Grrenville, South Caroline 29609 (US); Debellis, Lisa, Simpsonsville, South Caroline 29681 (US); Seal, Michael Damian, Simpsonsville, South Caroline 29680 (US)
(74) Representative: Goode, Ian Roy

(57) **Abstract**

A turbine component (56) adapted for use in a hot gas path of a gas turbine having a thermal barrier coating (62) on at least one surface portion thereof, the turbine component further comprising a protective top coating (64) of predetermined thickness, the thickness determined as a function of in-use temperature of the thermal barrier coating.

## Description

This invention relates to coatings for components exposed to high temperatures, such as those in the hostile thermal environment of a gas turbine engine. More particularly, this invention is directed to a protective top coating applied over a thermal barrier coating (TBC) on components located in the hot gas path of a gas turbine engine.

Gas turbine engine components, e.g., stationary blades or nozzles, rotating blades, and combustion hardware experience performance degradation during operation due to such things as surface erosion and fouling. The lives of the components are also impacted by, among other things, the extremely high temperatures to which they are exposed.

Combustion hardware and other hot gas path components of gas turbine engines are often protected by a thermal barrier coating or TBC, which reduces the temperature of the underlying component substrate and thereby prolongs the service life of the component. Ceramic materials and particularly yttria-stabilized zirconia (YSZ) are widely used as TBC materials because of their high temperature capability, low thermal conductivity, and relative ease of deposition by plasma spraying, flame spraying and physical vapor deposition (PVD) techniques. Air plasma spraying (APS) is often preferred over other deposition processes due to relatively low equipment costs and ease of application and masking.

Unfortunately, TBC surface finishes are extremely rough and prone to erosion. In fact, the TBC surface roughness is greater than the parent metal surface finish, thus increasing external heat transfer and overall nozzle heat load as well as negatively impacting aerodynamic performance. TBC surface degradation is often the result of fouling due to burning fuels containing alkali metals that combine with sulfur during the combustion process and deposit low melting salts on the surface of the parts. Contaminants can also come from the air ingested or water injected for NOₓ control or power augmentation. Further degradation occurs due to erosion of the TBC material itself.

More specifically, it is recognized that the service life of a TBC system is typically limited by a spallation event brought on by thermal fatigue. In addition to the CTE mismatch between a ceramic TBC and a metallic substrate, spallation can be promoted as a result of the TBC being contaminated with compounds found within a gas turbine engine during its operation.

In aircraft gas turbine engine components, diffuse reflective barrier coatings have been applied over TBC's with an outer low emissivity topcoat applied over the reflective barrier coating. The additional top coat is designed to reduce heat flow into the component. See U.S. Patent No. 6,210,791.

It is also known to apply a protective coating over TBC's to protect the TBC, where the protective coating is comprised of alumina particles in a matrix material, with a suitable carrier liquid such as methanol, ethanol, etc. The protective coating is designed to reduce if not prevent the infiltration of CMAS into the underlying TBC. See U.S. Patent No. 6,465,090.

This invention takes the prior teachings one step further by determining the thickness of the protective coating as described in the '090 patent as a function of TBC temperature in use. The end result is a smooth protective barrier coating applied over the traditional TBC that protects the TBC from erosion, provides a smooth surface on which contaminants can not adhere, reduces heat transfer, reduces susceptibility to surface fouling and improves aerodynamic performance.

In the exemplary embodiment, the protective top coating comprises alumina particles in a silica-containing matrix. The coating may be substantially homogeneous or be formed of multiple layers having different compositions.

Of particular significance in this invention is the identification or determination of a minimum effective thickness for the TBC that will minimize if not eliminate the potential for spallation of the protective top coating. It has been discovered that the temperature of the TBC in use determines this minimum acceptable thicknesses for the TBC that enables the protective top coating to provide a significantly extended life for gas turbine engine components protected by TBC's.

Accordingly, in one aspect, the invention relates to a turbine component adapted for use in a hot gas path of a gas turbine having a thermal barrier coating of predetermined thickness on at least one surface portion thereof, the turbine component further comprising a protective top coating applied over the thermal barrier coating, the predetermined thickness determined as a function of in-use temperature of the thermal barrier coating.

In another aspect, the invention relates to a component having a thermal barrier coating on a surface thereof, the component comprising an outer protective top coating overlying the thermal barrier coating, the outer protective top coating comprising alumina particles in a silica-containing matrix, the alumina particles constituting about 5 to about 85 weight percent of the outer protective top coating, and the silica-containing matrix consisting essentially of at least one of silica, silicate, and mullite, and constituting about 1 to about 45 weight percent of the outer protective top coating; and wherein the thermal barrier coating has a thickness determined as a function of in-use temperature of the thermal barrier coating.

In still another aspect, the invention relates to a gas turbine engine component having a thermal barrier coating of partially-stabilized zirconia on a surface thereof, the component comprising an outer protective top coating overlying the thermal barrier coating, the outer protective top coating comprising alumina particles in a binder matrix, the binder matrix consisting essentially of at least one of silica, silicate and mullite, the alumina particles constituting about 5 to about 85 weight percent of the outer protective top coating, the binder matrix constituting about 1 to about 45 weight percent of the outer protective top coating, the outer protective top coating having a surface roughness of not greater than 3.8 micrometers Ra, and wherein the thermal barrier coating has a thickness determined as a function of in-use temperature of the thermal barrier coating.

In still another aspect, the invention relates to a method of preventing spallation of a protective top coating applied over a thermal barrier coating on a gas turbine engine component comprising determining when spallation of the protective top coating occurs as a function of minimum effective thickness and in-use temperature of the thermal barrier coating; and choosing a thickness for the thermal barrier coating that is at least equal to the minimum effective thickness.

Embodiments of the invention will now be described, by way of example, with reference to the accompanying drawings, in which:
FIGURE 1 is a partial cross-section of one section of a known gas turbine showing typical combustor components;
FIGURE 2 is a cross-section of another section of the gas turbine, showing the turbine stages downstream of the combustor components shown in Figure 1;
FIGURE 3 is a partial cross-section through a gas turbine nozzle in accordance with this invention; and
FIGURE 4 is a graph plotting protective top coating thickness against TBC in-use temperature.

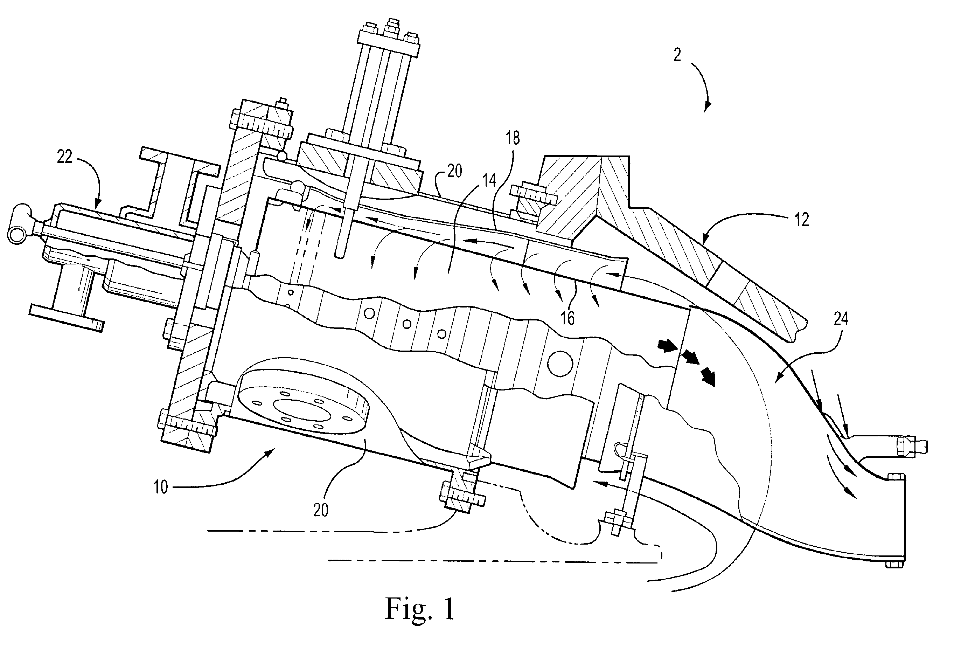

A typical gas turbine 2 includes a multi-stage compressor, multiple (e.g., six, ten, fourteen, etc.) combustors (oriented in a circular array about the rotor), with three or four turbine stages. As shown in Figure 1, each combustor 10 of the turbine 2 includes a combustion chamber 14 surrounded by a slot-cooled liner assembly 16 which, in turn, is enclosed partially within a flow sleeve 18.

The liner assembly 16 and flow sleeve 18 are enclosed within a cylindrical combustor casing 20. A fuel nozzle assembly 22 is mounted at the rear of the casing 20, and supplies fuel to the combustion chamber. Compressor discharge air is supplied to the combustor for reverse flow between the flow sleeve and liner and into the combustion zone or chamber. Combustion gases are supplied to the turbine stages via transition pieces connected to each combustor. One such transition piece is indicated at 24.

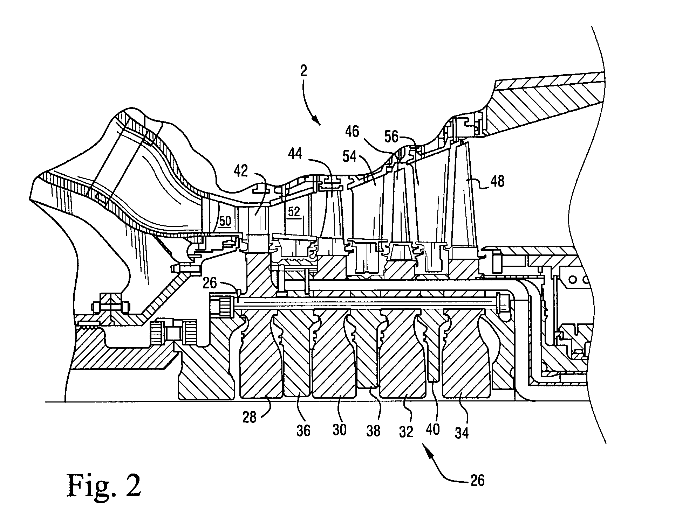

Referring now to Figure 2, the turbine rotor, generally designated 26, is comprised of stacked elements, for example, the rotor wheels 28, 30, 32 and 34 which form portions of an exemplary four-stage turbine rotor, with spacers 36, 38 and 40 alternating between the wheels. The wheels 28, 30, 32 and 34 each mount a plurality of circumferentially spaced turbine buckets, as indicated, respectively, at 42, 44, 46 and 48. Stationary nozzles 50, 52, 54 and 56 combine with adjacent rows of buckets to form the four turbine stages.

Figures 1 and 2 thus illustrate the various components in the hot gas path of the turbine 2 that are candidates for the TBC and top coatings as described herein.

For simplicity, the present invention will be described in reference to a high pressure nozzle component (for example, nozzle 50, as shown in Figure 2), but it will be understood that the invention is generally applicable to any component that operates within the hot gas path section of the turbine. Such components include rotating buckets or blades, combustion hardware including liners, transition pieces, combustion chamber caps, splash plates, etc.

The nozzle 50 generally includes an airfoil portion against which hot combustion gases are directed during operation of the gas turbine engine, and whose surface is therefore subjected to severe attack by oxidation, hot corrosion and erosion.

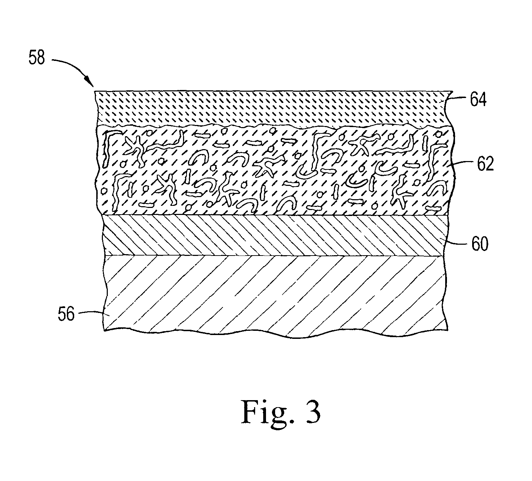

Represented in Figure 3 is a thermal barrier coating (TBC) system 58 of a type known in the art. As shown, the coating system includes a bond coat 60 overlying a substrate 56, which represents the base material of the nozzle 50. Suitable materials for the nozzle 50 include equiaxed, directionally-solidified and single-crystal nickel, iron and cobalt-base superalloys, as well as nonmetallic structural materials including ceramic matrix composite (CMC) materials. The bond coat 60 may be an overlay coating such as MCrAIX (where M is iron, cobalt and/or nickel, and X is yttrium or another rare earth element), or a diffusion aluminide coating such as a platinum aluminide. The bond coat 60 is shown as adhering a thermal barrier coating (TBC) 62 to the substrate 56. A preferred material for the TBC 62 is an yttria-stabilized zirconia (YSZ), a preferred composition being about 3 to about 8 weight percent yttria, though other ceramic materials could be used, such as alumina, nonstabilized zirconia, or zirconia partially or fully stabilized by magnesia, ceria, scandia or other oxides.

The TBC 62 is depicted as having been deposited by air plasma spraying (APS), by which "splats" of molten material are deposited on the bond coat 60. As indicated, the TBC 62 has a degree of inhomogeneity and porosity that typically occurs in coatings produced by plasma spraying. In addition, the surface of the TBC 62 is relatively coarse, with a surface roughness of 200 to 500 microinches Ra (about 5 to 13 micrometers Ra) being typical for YSZ deposited by APS (APSTBC). While depositing the TBC 62 by APS is particularly suitable, other plasma spraying techniques could also be used, such as low pressure plasma spraying (LPPS; also known as vacuum plasma spraying (VPS)). The TBC 62 is deposited to a thickness that is sufficient to provide the required thermal protection for the underlying substrate 56 and airfoil portion thereof on the order of about 75 to about 500 micrometers.

While many TBC systems use YSZ deposited by APS as the outermost layer, drawbacks include the roughness of the TBC surface, erosion resistance, and transmissivity to infrared (IR) radiation. Within the operating environment of a gas turbine engine, surface roughness increases turbulent transfer from the hot combustion gases to the component and reduces aerodynamic performance. While surface roughness can be reduced by polishing, such as tumbling or hand polishing, the final surface finish and thickness of the TBC cannot be closely controlled and the additional processing costs are undesirable. Though crystalline YSZ is very resistant to erosion, the erosion resistance of a YSZ APSTBC is significantly reduced as a result of its porosity and "microcrack" structure, the result of which is that fine particle bombardment dislodges small pieces of the TBC. In regard to IR transmissivity, analysis has shown that YSZ is about 20% to 40% transparent to thermal radiation (wavelengths of about 780 mm to about 1 mm) when deposited by APS to thicknesses of about 250 to 500 micrometers. As a result, the thermal protection provided by YSZ APSTBC is compromised in environments that have high thermal radiation loads, such as within a gas turbine engine.

To address the above concerns, the TBC 62 in Figure 3 is overcoated by a protective top coating 64. As the outermost layer on the nozzle 44, the protective coating 64 determines the surface roughness of the nozzle. The protective top coating 64 of this invention also serves as a barrier to thermal radiation and erosion. The protective top coating 64 achieves these features of the invention as a result of its thickness, composition and method of deposition.

The protective top coating 64 is generally an alumina-base-silica-bound ceramic material. More particularly, the protective top coating 64 contains particles of alumina (Al₂O₃) that are dispersed within a binder matrix composed of silica (SiO₂), silicates and/or mullite (3Al₂O₃ 2SiO₂), the relative amounts of which will vary depending on the firing temperature and subsequent service temperatures seen by the coating 64, with greater amounts of mullite forming at higher temperatures. The alumina particles constitute at least 5 up to about 85 weight percent of the outer protective top coating 64, while the silica-containing binder matrix constitutes about 1 to about 45 weight percent of the protective top coating 64. The relative amounts of alumina and silica-based matrix material in the protective top coating 64 can be tailored depending on the desired properties. Higher silica contents depress the CTE of the coating 64 and promote glass formation, while higher alumina contents have the generally preferred opposite effect, since a higher CTE reduces the CTE mismatch of the protective top coating 64 with a metallic substrate 58. Additional ceramic constituents for the protective coating 64 include zirconia (particularly YSZ), zinc titanate, and glass materials if present in appropriately limited amounts. For example, additions of zirconia are beneficial to increase the CTE of the coating 64, and additions of zinc titanate promote the reflectivity of the coating 64 to thermal radiation.

The alumina particles may be present within the protective top coating 64 in two discrete particle size ranges. If such a bimodal size distribution is used, a suitable particle size range for the coarser constituent is about 3.0 to about 6.0 micrometers in diameter, the particles of which constitute about 15 to about 55 weight percent of the protective coating. A preferred alumina powder for the coarser constituent has a particle size range of about 3.0 to about 5.5 micrometers in diameter. A suitable particle size range for the finer alumina particles of a bimodal powder is about 0.05 to about 0.8 micrometers in diameter, the particles of which constitute about 8 to about 45 weight percent of the coating 64. A preferred alumina powder for the finer constituent has a particle size range of about 0.10 to about 0.6 micrometers in diameter. In the preferred size ranges, the finer particles are able to fill the spaces between the larger particles at the surface of the protective coating 64 to achieve a surface roughness of not more than about 2.5 micrometers Ra, typically in the range of about 1.5 to 2.5 micrometers Ra (about 50 to 400/500 Ra), which is significantly smoother than that possible for the TBC 62 when deposited by APS (typically about 10 to 15 micrometers Ra(about 500 to 600 microinches Ra)). Another benefit of the bimodal size distribution of the alumina particles is that at very high temperatures, silica within the matrix of the protective top coating 64 preferentially reacts with the finer alumina particles to form a mullite phase.

Alumina powders for both the coarser and finer constituents are commercially available. For example, a suitable alumina powder for the coarser constituent is available under the designation A14 from ALCOA, which has a low soda content (NAO₂ < 0.10 percent) and a surface area of about 0.5 m²/g. A suitable alumina powder for the finer constituent is available under the designation Baikalox SM8 from Baikowski International Corporation, and has a surface area of about 10 m²/g and an agglomerate size distribution (on a cumulative weight basis) of 65% below 0.3 micrometer, 78% below 0.4 micrometer, 95% below 0.6 micrometer, and 100% below 1.0 micrometer.

To achieve the desired surface roughness of not more than 2.5 micrometers Ra, the protective top coating 64 must be capable of being deposited in such a manner as to have a smoother surface finish than the underlying TBC 62. In one embodiment, the protective top coating 64 is deposited by spraying a slurry that contains the alumina particles, a precursor of the silica-containing matrix, and a carrier liquid or solvent. A suitable precursor for the slurry is a silicone such as polymethyl siloxane, a particular example of which is a resin manufactured by GE Silicones under the name SR350, and classified as a methylsesquisiloxane mixture of the polysiloxane family. A suitable carrier liquid is an anhydrous alcohol such as methanol or ethanol, though acetone, isopropyl alcohol or trichloroethylene could be used. A suitable slurry contains about 40 to about 65 weight percent of the alumina powder (preferably having the two particle size ranges discussed above), about 1 to about 45 weight percent of the silica precursor, and about 5 to about 90 weight percent of the carrier liquid. An additional and optional constituent is zinc titanate in amounts of up to about 50 weight percent of the slurry to promote the reflectivity of the coating 64 to thermal radiation. After being sprayed on the TBC 62 using any suitable sprayer known in the art, the composition can be dried at room temperature and then fired to yield a substantially homogeneous protective coating 64 with a surface roughness in the range of about 40 to 150 microinches Ra (about 1 to about 3.8 micrometers Ra). The composition of the sprayed protective coating 64 is preferably about 30 to about 55 weight percent of the coarser alumina, about 20 to about 40 weight percent of the finer alumina, up to about 30 weight percent zinc titanate (if present0, and about 25 to about 45 weight percent of the silica-containing matrix.

The outer layer of the protective top coating 64 may contain, in addition to the alumina powder and silica precursor, a glass frit material and zinc titanate (Zn₂TiO₄), the latter of which promotes the reflectivity of the coating.

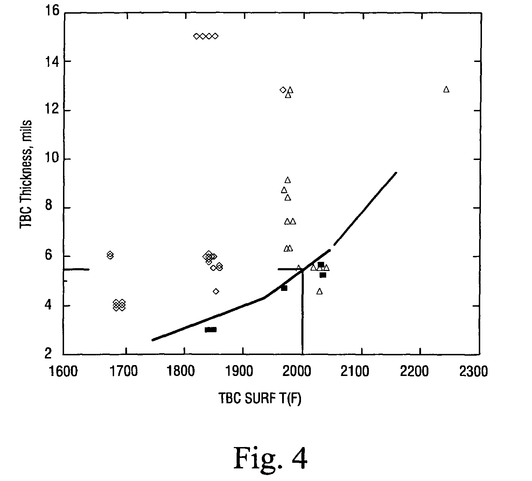

The thickness, structure and properties of the protective coating 64 can be tailored by the firing temperature and duration used. Suitable thicknesses for the protective top coating may be in the range of about 25 to about 150 micrometers. In accordance with this invention, the thickness of the TBC 62 is preferably determined as a function of the operating or in-use temperature of the TBC as described below. Reference is now made to Figure 4 which illustrates in graph form the relationship between thickness of the TBC 62 and the operating temperature of the TBC designed to operate in use at temperature ranges of between about 1750°F and 2200°F. If, for example, the operating temperature of the TBC 62 is 2000°F, the minimum acceptable thickness for the TBC 62 would be about 5.5 mils. Thicknesses below the acceptable levels, i.e., under the curve, will result in spallation of the protective top coating 64 and possibly even failure of the component. To prevent spallation of the protective top coating 64, the thickness of the TBC 62 should be at least and preferably greater than the minimum effective thickness represented by the curve. It will be appreciated that suitable graphs may be developed for the various turbine components, depending on expected TBC temperatures.

For completeness, various aspects of the invention are set out in the following numbered clauses:
1. A turbine component (50) adapted for use in a hot gas path of a gas turbine having a thermal barrier coating (62) of predetermined thickness on at least one surface portion (56) thereof, said turbine component further comprising a protective top coating (64) applied over the thermal barrier coating, said predetermined thickness determined as a function of in-use temperature of the thermal barrier coating.
2. The turbine component of clause 1 wherein the turbine component (50) comprises a turbine nozzle.
3. The turbine component of clause 1 wherein said protective top coating (64) has a thickness in a range of from about 25 to about 160 micrometers.
4. The turbine component of clause 1 wherein said protective top coating (64) comprises alumina particles in a silica-containing matrix.
5. The turbine component of clause 1 including a bond coat (60) between said component and said thermal barrier coating.
6. The turbine component of clause 1 comprising a bucket (42) adapted to be secured to a turbine rotor.
7. The turbine component of clause 1 comprising a combustion liner (16).
8. The turbine component of clause 1 comprising a transition piece (24).
9. A component (50) having a thermal barrier coating (62) on a surface thereof, the component comprising an outer protective top coating (64) overlying the thermal barrier coating, the outer protective top coating comprising alumina particles in a silica-containing matrix, the alumina particles constituting about 5 to about 85 weight percent of the outer protective top coating, and the silica-containing matrix consisting essentially of at least one of silica, silicate, and mullite, and constituting about 1 to about 45 weight percent of the outer protective top coating; and wherein the thermal barrier coating has a thickness determined as a function of in-use temperature of the thermal barrier coating.
10. A component according to clause 9, wherein the outer protective top coating (64) further comprises at least one of a glass material, a zirconia-based material, and zinc titanate.
11. A component according to clause 9, wherein the outer protective top coating (64) comprises two particle size ranges of the alumina particles, a first of the two particle size ranges being about 3.0 to about 6.0 micrometers, and a second of the two particle size ranges being about 0.05 to about 0.8 micrometers.
12. A component according to clause 9, wherein the alumina particles within the first particle size range constitute about 15 to about 55 weight percent of the outer protective coating, and the alumina particles within the second particle size range constitute about 8 to about 45 weight percent of the outer protective top coating.
13. A component according to clause 9, wherein the outer protective top coating (64) has a thickness of about 25 to about 150 micrometers.
14. A component according to clause 9, comprising a stationary turbine nozzle (50).
15. A gas turbine engine component (50) having a thermal barrier coating (62) of partially-stabilized zirconia on a surface thereof, the component comprising an outer protective top coating (64) overlying the thermal barrier coating, the outer protective top coating comprising alumina particles in a binder matrix, the binder matrix consisting essentially of at least one of silica, silicate and mullite, the alumina particles constituting about 5 to about 85 weight percent of the outer protective top coating, the binder matrix constituting about 1 to about 45 weight percent of the outer protective top coating, the outer protective top coating having a surface roughness of not greater than 3.8 micrometers Ra, and wherein the thermal barrier coating has a thickness determined as a function of in-use temperature of the thermal barrier coating.
16. The turbine component of clause 15 including a bond coat (60) between said component and said thermal barrier coating.
17. The turbine component of clause 15 comprising a bucket (42) adapted to be secured to a turbine rotor.
18. The turbine component of clause 15 comprising a combustion liner (16).
19. The turbine component of clause 15 comprising a transition piece (24).
20. A component according to clause 15 comprising a stationary turbine nozzle (50).
21. A method of preventing spallation of a protective top coating (64) applied over a thermal barrier coating (62) on a gas turbine engine component (50) comprising:
   a. determining when spallation of the protective top coating (64) occurs as a function of minimum effective thickness and in-use temperature of the thermal barrier coating (62); and
   b. choosing a thickness for the thermal barrier coating (62) that is at least equal to said minimum effective thickness.

## Claims

1. A component (50) having a thermal barrier coating (62) on a surface thereof, the component comprising an outer protective top coating (64) overlying the thermal barrier coating, the outer protective top coating comprising alumina particles in a silica-containing matrix, the alumina particles constituting about 5 to about 85 weight percent of the outer protective top coating, and the silica-containing matrix consisting essentially of at least one of silica, silicate, and mullite, and constituting about 1 to about 45 weight percent of the outer protective top coating; and wherein the thermal barrier coating has a thickness determined as a function of in-use temperature of the thermal barrier coating.

2. A component according to claim 1, wherein the outer protective top coating (64) further comprises at least one of a glass material, a zirconia-based material, and zinc titanate.

3. A component according to claim 1, wherein the outer protective top coating (64) comprises two particle size ranges of the alumina particles, a first of the two particle size ranges being about 3.0 to about 6.0 micrometers, and a second of the two particle size ranges being about 0.05 to about 0.8 micrometers.

4. A component according to claim 1, wherein the alumina particles within the first particle size range constitute about 15 to about 55 weight percent of the outer protective coating, and the alumina particles within the second particle size range constitute about 8 to about 45 weight percent of the outer protective top coating.

5. A component according to claim 1, wherein the outer protective top coating (64) has a thickness of about 25 to about 150 micrometers.

6. A component according to claim 1, comprising a stationary turbine nozzle (50).

7. A gas turbine engine component (50) having a thermal barrier coating (62) of partially-stabilized zirconia on a surface thereof, the component comprising an outer protective top coating (64) overlying the thermal barrier coating, the outer protective top coating comprising alumina particles in a binder matrix, the binder matrix consisting essentially of at least one of silica, silicate and mullite, the alumina particles constituting about 5 to about 85 weight percent of the outer protective top coating, the binder matrix constituting about 1 to about 45 weight percent of the outer protective top coating, the outer protective top coating having a surface roughness of not greater than 3.8 micrometers Ra, and wherein the thermal barrier coating has a thickness determined as a function of in-use temperature of the thermal barrier coating.

8. The turbine component of claim 7 including a bond coat (60) between said component and said thermal barrier coating.

9. A method of preventing spallation of a protective top coating (64) applied over a thermal barrier coating (62) on a gas turbine engine component (50) comprising:
a. determining when spallation of the protective top coating (64) occurs as a function of minimum effective thickness and in-use temperature of the thermal barrier coating (62); and
b. choosing a thickness for the thermal barrier coating (62) that is at least equal to said minimum effective thickness.
